# DEMANDE DE BREVET EUROPEEN

(11) **EP 2 556 993 A1**
(43) Date de publication de la demande: **13.02.2013**
(21) Numéro de dépôt: 12447015.4
(22) Date de dépôt: 10.08.2012
(51) Int. Cl.: B60N 3/08, B60N 3/10, B65F 7/00

(54) **Poubelle pour tous les types de véhicules**

(30) Priorité: 11.08.2011 BE 201100487
(71) Demandeur: Viaene, Serge, 1380 Lasne (BE)
(72) Inventeur: Viaene, Serge, 1380 Lasne (BE)

(57) **Abrégé**

Poubelle d'un véhicule comprenant un récipient (2) attaché à un élément de fixation (3, 4), dont l'élément de fixation comporte un support (4) pourvue sur au moins une partie de sa surface d'organes d'accrochage agencés pour prendre prise de façon réversible dans un recouvrement de sol dudit véhicule.

## Description

L'invention concerne un dispositif de poubelle pour tous types de véhicules

Plusieurs dispositifs sont connus :
A. KR20030037702. Le panneau de réception de la poubelle doit être fixé sur une paroi au moyen de vis ou autres.
B. 10-2010-0123403. La poubelle complète doit être fixée sur le support de la console.
C. CN101654073. Un panneau de type velcro doit être fixé sur une paroi ou s'accrochera le sac poubelle.
D. KR20090026387. La poubelle complète doit être fixée sur le support de la console.
E. US5890756. Poubelle encastrable dans la console.

Un inconvénient à tous ces dispositifs nécessite une modification, une fixation par vis ou autres pour installer la poubelle.

L'invention a pour objet qu'aucune modification ou fixation est nécessaire pour adopter la poubelle à tous les véhicules.

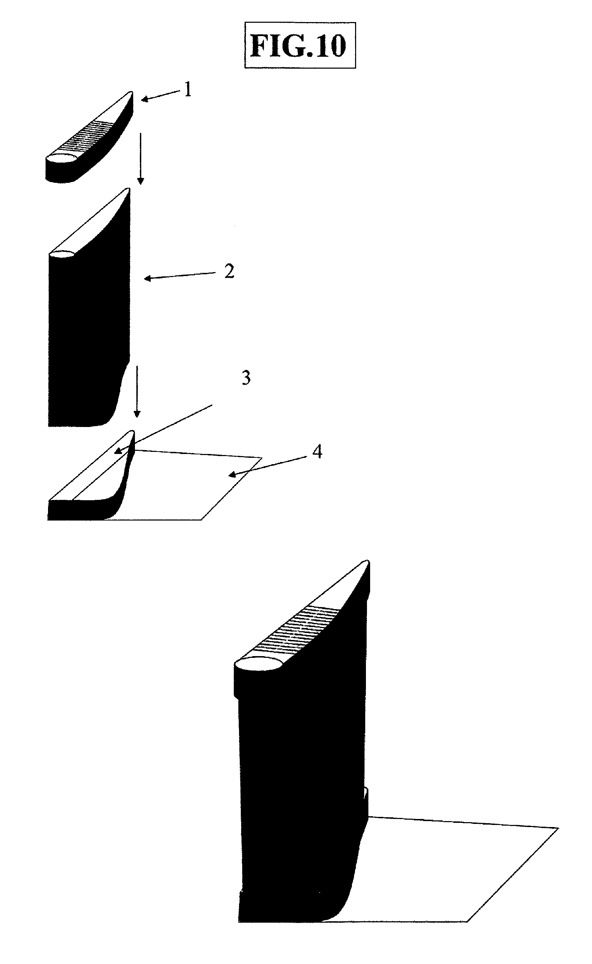

Poubelle d'un véhicule comprenant un ensemble récipient (fig 10 > 1&2) attaché à un élément de fixation (fig 10 > 3), caractérisée que l'élément de fixation comporte un support (fig 10 > 4) pourvue sur au moins une partie de sa surface d'organes d'accrochage agencés pour prendre prise de façon réversible dans un recouvrement de sol dudit véhicule.

### La poubelle est conçue par 4 éléments :

| | |
|---|---|
| 1. Fig 10 > 1 | Couvercle. |
| 2. Fig 10 > 2 | Récipient |
| 3. Fig 10 > 3 | Socle |
| 4. Fig 10 > 4 | Support socle |

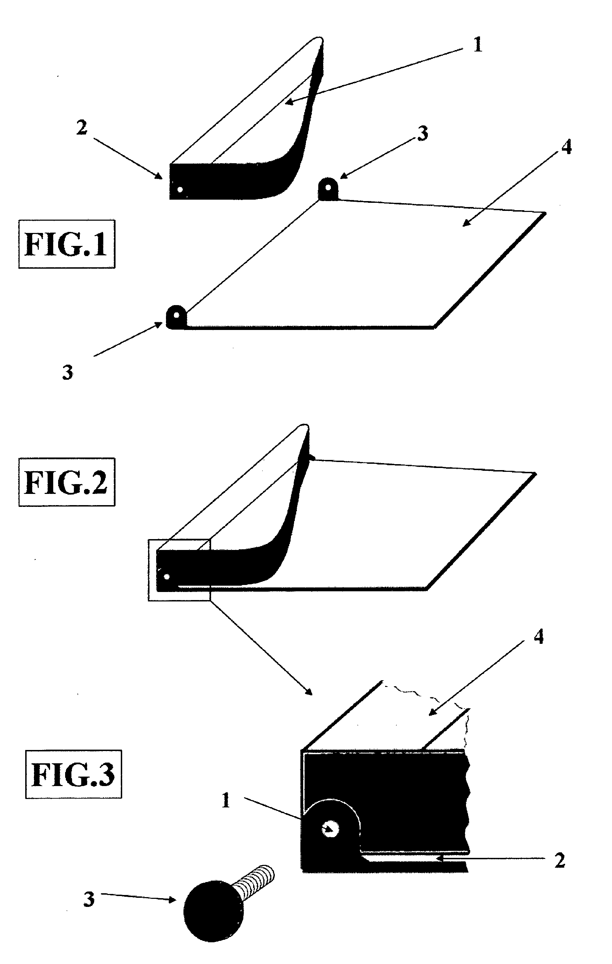

### L'ensemble du socle (fig 2) est composé en 2 parties : Fig 10 > 3 & 4

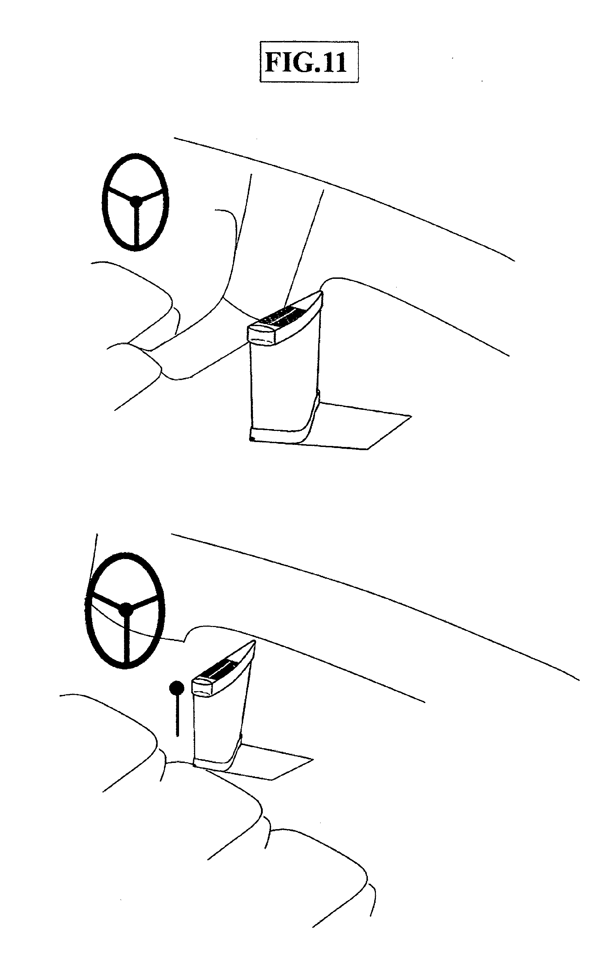

La (fig 1 >1) s'adapte sur la (fig 1> 4) par un système de blocage (fig 3 > 1-3) au moyen d'un écrou ou autres qui rentre dans (fig 3 >4) ce qui permet au socle (fig 1 > 1) d'avoir une inclinaison d'adaptation à la poubelle (fig 10 > 2) par rapport à une console ou autres (fig 11).

En effet, l'ensemble de la poubelle posée sur le tapis de fond ou caoutchouc ou autres du sol d'une voiture ou autres véhicules permet à la poubelle de prendre appui sur une console ou autres avec l'inclinaison choisie.

Vu cette « appui » et le socle, l'ensemble de la poubelle ne peut pas basculer ni d'un côté ou l'autre.

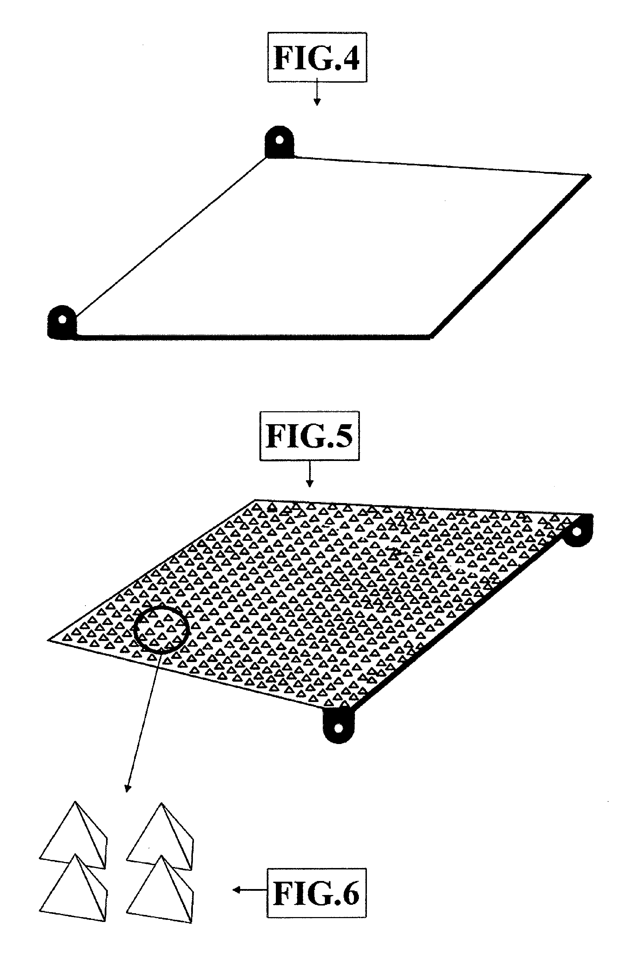

Une fois l'ensemble de la poubelle posée, elle ne peut également ni avancer, ni reculer, ni aller de gauche à droite grâce à son adhérence (fig 5) qui ce grippe par les moyens antiglisse du type pyramides (fig 6).

Le tapis de protection (du tapis de sol ou autres) ce glisse entre le socle et sa base (fig 3 > 2) ce qui donne un empêchement supplémentaire à l'ensemble de la poubelle de ce déplacer.

Toutes ces applications sont égalements valable pour toutes les conduites à droite.

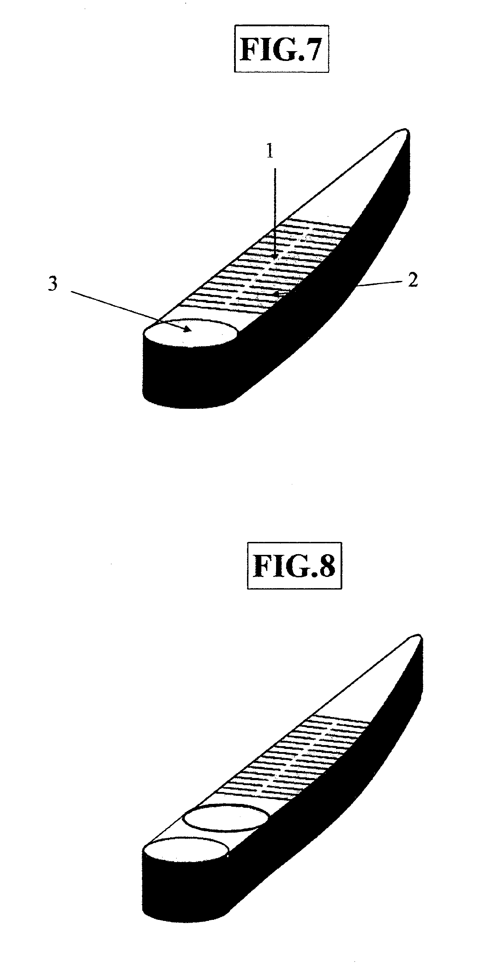

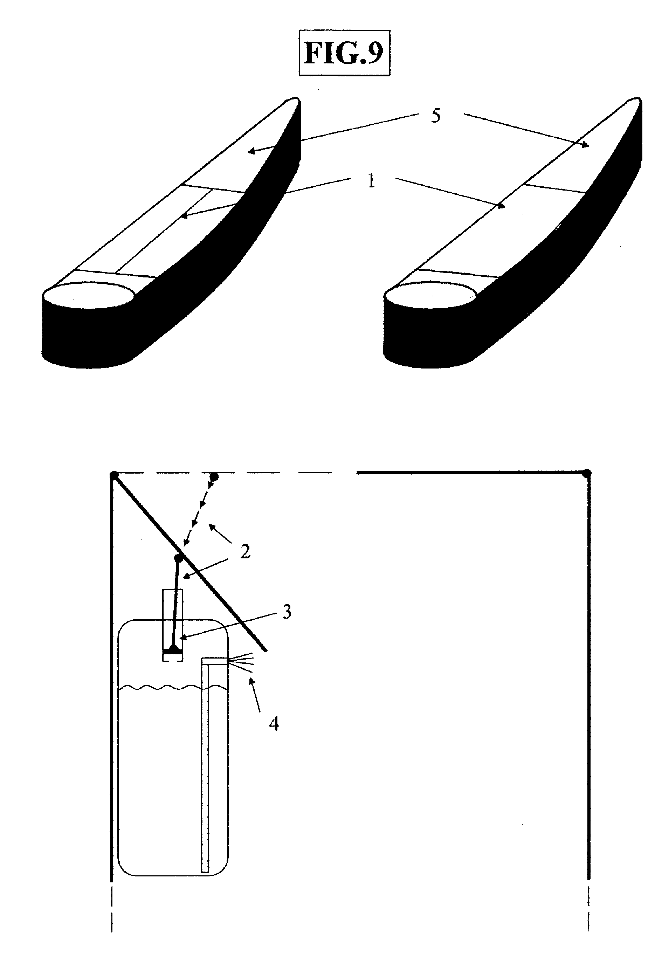

### Les couvercles (fig 7) & (fig 9 >5) ont pour définition :

1. Le passage des déchets dans la poubelle ce fait par une ouverture (fig 7 > 1). Cette ouverture occulte la vision intérieure de la poubelle par 2 rangées de poils du style brosses souples (fig 7 > 2) ou par 2 rangées de style couvercles à ressorts (fig 9 >1).
2. A chaque passage de déchets par les couvercles à ressorts, un des couvercles est équipé d'un axe fixé sur rotule (fig 9 >2) qui est relié à un poussoir (fig 9 >3) afin de libérer un produit de désinfection et de bonne odeur (fig 9 >4). Par exemple : Bien connu des vaporisateurs de parfum ou autres.
3. De pouvoir mettre un cendrier adapté, boissons ou autres dans un ou plusieurs emplacements prévu à ces effets (fig 7>3 & fig 8).

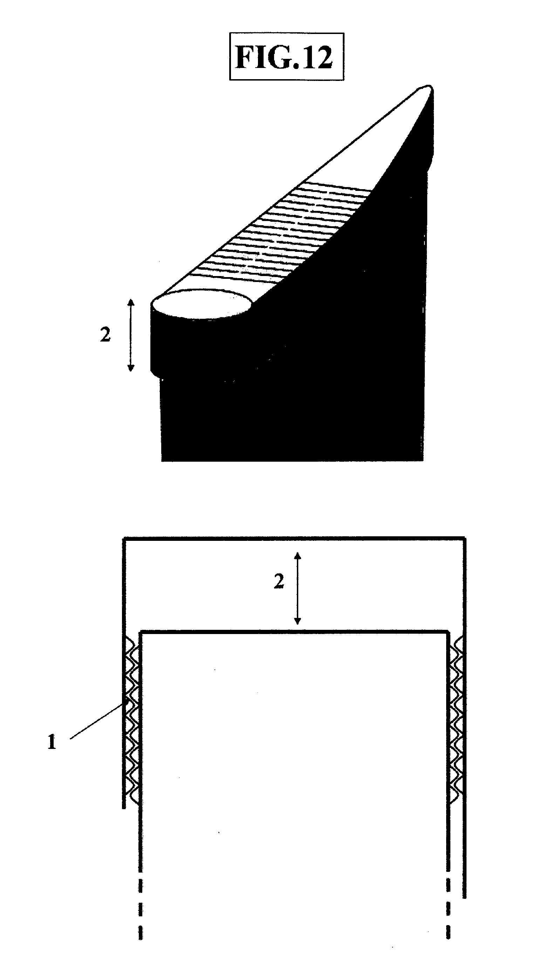

La hauteur de la poubelle ce règle par l'insertion du couvercle dans la poubelle. Des formes graduées sur le dessus de la poubelle et à l'intérieur du couvercle (fig 12-> 1) permette de régler la hauteur (fig 12 -> 2) à l'adaptation du véhicule ou par un autre système de blocage.

Certains éléments de la poubelle peuvent être en matière rigide ou souple pour permettre d'épouser certaines formes ou autres du véhicule.

## Revendications

1. Poubelle d'un véhicule comprenant un récipient attaché à un élément de fixation, caractérisée que l'élément de fixation comporte un support pourvue sur au moins une partie de sa surface d'organes d'accrochage agencés pour prendre prise de façon réversible dans un recouvrement de sol dudit véhicule.

2. Poubelle suivant la revendication 1, **caractérisée en ce que** les organes d'accrochage sont formés par un ensemble de crochets.

3. Poubelle suivant la revendication 2, **caractérisée en ce que** l'ensemble des crochets est disposé sous forme d'une matrice sur le support.

4. Poubelle suivant la revendication 2 ou 3, **caractérisée en ce que** les crochets sont formés par des pyramides.

5. Poubelle suivant l'une des revendications 1 à 4, **caractérisée en ce que** le support comporte au moins une attache agencée pour y fixer le récipient de façon détachable et/ou pivotable.

6. Poubelle suivant l'une des revendications 1 à 5, **caractérisée en ce que** le support est formé par une plaque.

7. Poubelle suivant l'une des revendications 1 à 6, **caractérisée en ce que** le récipient est attaché à l'élément de fixation de façon à permettre un réglage en hauteur du récipient.

8. Poubelle suivant l'une des revendications 1 à 7, **caractérisée en ce que** le récipient est pourvu d'un cendrier et/ou d'un porte bouteille.

9. Poubelle suivant l'une des revendications 1 à 8, **caractérisée en ce que** l'élément de fixation comporte un système de blocage du récipient adapté à l'inclinaison de toutes les consoles ou autres.

10. Poubelle suivant l'une des revendications 1 à 9, **caractérisée en ce qu'**elle comporte un éjecteur de produit de désinfection et/ou de déodorant agencé pour éjecter le produit.

11. Poubelle suivant la revendication 10, **caractérisée en ce que** l'éjecteur est agencé pour éjecter lors d'une fermeture du récipient.
